# FASCICULE DE BREVET EUROPEEN

(11) **EP 1 655 175 B1**
(45) Date de publication et mention de la délivrance du brevet: **23.04.2008**
(21) Numéro de dépôt: 05292367.9
(22) Date de dépôt: 08.11.2005
(51) Int. Cl.: B60R 5/04

(54) **Cache-bagages monte sans axe sur l'ébénisterie d'un véhicule automobile**
Gepäckraumabdeckung mit achsenloser Montage an der Verkleidung eines Kraftfahrzeugs
Luggage compartment cover with axleless mounting on the interior trim of a vehicle

(30) Priorité: 09.11.2004 FR 0452573
(43) Date de publication de la demande: 10.05.2006
(73) Titulaire: CENTRE D'ETUDE ET RECHERCHE POUR L'AUTOMOBILE ( CERA), 51100 Reims (FR)
(72) Inventeur: Montagne, Frédéric, 51150 Tours sur Marne (FR); Guenamant, Nicolas, 51100 Reims (FR)
(74) Mandataire: Sayettat, Julien Christian

(56) Documents cités:
- DE-A1- 10 205 154
- DE-C1- 10 033 381

## Description

L'invention concerne un dispositif de montage d'un cache-bagages sur une ébénisterie latérale de coffre de véhicule automobile et un ensemble cache-bagages/ébénisterie utilisant un tel dispositif.

Il est connu de réaliser des cache-bagages amovibles comprenant un carter, dans lequel est disposé un enrouleur, et une bande souple associée sur un premier bord à l'enrouleur et sur un deuxième bord opposé à une bavette de rigidification, de sorte que la bande soit mobile entre une position enroulée et une position déployée d'utilisation.

De tels cache-bagages comprennent en outre des moyens d'association réversibles du carter sur les ébénisteries, lesdits moyens étant prévus en extrémités du carter de sorte à pouvoir être associés à des moyens d'association réciproques prévus sur les ébénisteries, comme décrit dans le document DE 10033381 C1 publié le 09.08.2001.

Pour des raisons d'ergonomie et de sécurité, il est nécessaire que le carter soit maintenu de façon ferme sur les ébénisteries lorsque le cache bagages est monté dans le véhicule.

En outre, il est important que le cache-bagages puisse être démonté aisément, en particulier avec une seule main, par exemple lorsque l'on rabat les sièges arrières du véhicule afin d'augmenter le volume du coffre.

Les dispositifs existants, basés sur des mécanismes d'accrochages plus ou moins complexes, ne permettent pas un démontage aisé des cache-bagages, l'utilisateur étant généralement obligé de procéder en plusieurs étapes, intégrant notamment une étape de déverrouillage, et/ou d'utiliser ses deux mains.

L'invention a pour but de pallier ces inconvénients en proposant un dispositif de montage permettant un démontage aisé du cache-bagages, notamment d'une seule main, et assurant un maintien ferme du cache-bagages lorsqu'il est monté dans le véhicule.

A cet effet, et selon un premier aspect, l'invention propose un dispositif de montage d'un cache-bagages sur une ébénisterie latérale d'un coffre de véhicule automobile, ledit cache-bagages comprenant :
- un carter allongé pourvu d'une fente longitudinale,
- un enrouleur monté en rotation dans le carter,
- au moins une bande souple, passant à travers la fente, dont le premier bord longitudinal est associé à l'enrouleur, de sorte que la bande souple soit mobile entre une position rétractée de rangement dans le carter et une position déployée d'utilisation,
- une bavette de rigidification, associé au deuxième bord longitudinal de la bande souple et dont au moins une partie est saillante par rapport au carter lorsque la bande souple est rétractée, de sorte à former moyen de préhension,
- un moyen d'association réversible du carter sur l'ébénisterie, ledit moyen étant prévu en extrémité du carter de sorte à pouvoir être associé à un moyen d'association réciproque prévu sur l'ébénisterie,
le moyen d'association présentant au moins une surface de butée et le moyen d'association réciproque au moins une surface de butée réciproque, les surfaces de butée correspondantes coopérant entre elles en position d'association du carter sur l'ébénisterie, de sorte à assurer le couplage du moyen d'association et du moyen d'association réciproque, lorsque le cache-bagages est monté, l'actionnement en rotation autour d'un axe longitudinal de la partie saillante produisant une suppression de la coopération entre les surfaces de butées correspondantes de sorte à permettre l'extraction du carter, et donc du cache-bagages.

Le terme « longitudinal » est pris en référence à la direction définie par la longueur du carter.

Dans la suite de ce descriptif, les termes « avant », « arrière », « supérieur », « inférieur »,... sont pris en référence au véhicule, le cache-bagages étant monté dedans. Par ailleurs, le terme « latéral » est considéré relativement au terme « longitudinal ».

Par « ébénisterie » on entend tout support permettant de monter le carter, ce support pouvant être solidaire des garnitures latérales de coffre, des sièges arrières, etc...

Le dispositif selon l'invention permet lorsque la bande est enroulée, par simple manipulation du moyen de préhension de la bavette, notamment à l'aide d'une seule main, d'extraire le cache-bagages des ébénisteries.

Il en résulte une grande facilité de démontage du cache-bagages. En outre, lorsque le cache-bagages est monté, le carter est fermement maintenu sur les ébénisteries par coopération des surfaces de butée correspondantes.

On notera que la position d'extraction du carter correspond sensiblement à la position d'insertion du carter dans les ébénisteries, lors du montage du cache bagages.

Les opérations de montage/démontage du cache-bagages sont effectuées uniquement par actionnement du moyen de préhension, sans qu'il soit nécessaire de procéder à une étape préalable de verrouillage/déverrouillage telle que décrite dans l'art antérieur, cette fonction étant assurée par simple actionnement du moyen de préhension.

Selon une première réalisation, le moyen d'association réciproque est formé par un logement dans l'ébénisterie, ouvert dans sa partie supérieure et dans sa partie latérale débouchant sur le coffre, ledit moyen d'association réciproque comprenant :
- une face inférieure sensiblement horizontale,
- une face arrière concave disposée en dépouille par rapport à la face inférieure,
- et une face avant concave disposée en contre-dépouille par rapport à la face inférieure,
le moyen d'association se présentant sous la forme d'un embout disposé en extrémité du carter et présentant des faces correspondant à celles du moyen d'association réciproque,
- la face arrière du moyen d'association étant pourvue dans sa partie médiane d'un premier creux longitudinal coopérant, en position d'association du carter sur l'ébénisterie, avec un premier bossage longitudinal prévu sur la face arrière du moyen d'association réciproque, le versant inférieur du premier creux - respectivement du premier bossage - formant première surface de butée - respectivement première surface de butée réciproque,
- la face avant du moyen d'association étant pourvue dans sa partie supérieure d'un deuxième bossage longitudinal coopérant, en position d'association du carter sur l'ébénisterie, avec un deuxième creux longitudinal prévu sur la face avant du moyen d'association réciproque, le deuxième bossage - respectivement deuxième creux - formant deuxième surface de butée - respectivement deuxième surface de butée réciproque,
- les faces inférieures du moyen d'association et du moyen d'association réciproque étant séparées par un espacement permettant, lors de l'actionnement du moyen de préhension, la rotation du carter et du moyen d'association et la désactivation de la coopération des surfaces de butées correspondantes.

Une telle réalisation présente l'avantage de ne requérir aucun mécanisme de verrouillage du carter sur l'ébénisterie, ce verrouillage étant assuré du simple fait des configurations géométriques respectives des moyen d'association et moyen d'association réciproque.

Selon une deuxième réalisation, une surface de butée est disposée sur un ergot mobile entre une position saillante et une position escamotée, ledit ergot étant positionné à l'avant ou à l'arrière du moyen d'association et étant solidaire d'un moyen de contrainte le déployant en position saillante, un logement annexe étant prévu dans le moyen d'association réciproque de sorte à accueillir l'ergot en position saillante et à former surface de butée réciproque lorsque le carter est en position d'association.

Dans un cas particulier, le moyen de contrainte est un ressort, l'ergot et le ressort étant respectivement agencés de sorte à permettre l'escamotage de l'ergot lors de l'actionnement du moyen de préhension entraînant une rotation du carter.

En variante de cette deuxième réalisation, une surface de butée est disposée sur un ergot souple compressible, ledit ergot étant positionné à l'avant ou à l'arrière du moyen d'association, un logement annexe étant prévu dans le moyen d'association réciproque de sorte à accueillir l'ergot et à former surface de butée réciproque lorsque le carter est en position d'association, l'ergot se désengageant du logement annexe et se positionnant en position compressée contre le moyen d'association réciproque lors de l'actionnement du moyen de préhension entraînant une rotation du carter.

Une telle variante permet de s'affranchir du moyen de contrainte précédemment utilisé, ledit moyen étant intégré à l'ergot du fait de sa souplesse.

Dans les deux réalisations décrites, la bavette étant solidaire du carter par l'intermédiaire d'une bande souple enroulée autour d'un enrouleur, notamment de type enrouleur à couple de rappel, l'actionnement du moyen de préhension peut transmettre le couple de rotation de façon différée du fait d'un léger déroulement de la bande lors de l'actionnement.

Pour y remédier, la bavette peut comprendre un moyen de coopération avec le carter, ledit carter comprenant un moyen de coopération réciproque de sorte à bloquer le moyen de préhension en rotation par rapport au carter lorsque la bande souple est en position rétractée.

Dans une réalisation particulière, le moyen de coopération est formé par un méplat disposé à l'avant de la bavette, le moyen de coopération complémentaire étant formé par la fente du carter, le méplat s'introduisant dans la fente lorsque la bande souple est rétractée.

Selon une troisième réalisation, une surface de butée est disposée sur un ergot mobile en rotation entre une position saillante et une position escamotée, ledit ergot étant positionné à l'avant ou à l'arrière dudit moyen d'association, ledit ergot étant monté en rotation autour d'un premier axe longitudinal et étant rendu solidaire d'une biellette, ladite biellette étant raccordée en outre à une butée de déverrouillage mobile en rotation autour d'un deuxième axe longitudinal, ladite butée coopérant avec ladite bavette, par l'intermédiaire de surfaces de came réciproques, de sorte à être actionnée en rotation lors de l'actionnement dudit moyen de préhension et à assurer l'escamotage dudit ergot par l'intermédiaire de ladite biellette, un logement annexe étant prévu dans ledit moyen d'association réciproque de sorte à accueillir ledit ergot en position saillante et à former surface de butée réciproque lorsque ledit carter est en position d'association.

Selon un deuxième aspect, l'invention concerne un ensemble cache-bagages/ébénisterie latérale de coffre de véhicule automobile comprenant au moins un dispositif tel que décrit ci-dessus.

D'autres particularités et avantages de l'invention apparaîtront dans la description qui suit, faite en référence aux figures jointes dans lesquelles :
- la figure 1 est une vue schématique en perspective d'ensemble d'un cache-bagages associé aux ébénisteries d'un coffre, la bande souple étant en position semi-déployée,
- la figure 2 est une vue latérale d'un dispositif selon une première réalisation, en position d'association (a), en position intermédiaire (b) et en position d'extraction (c),
- la figure 3 est une coupe latérale d'un dispositif selon une deuxième réalisation, en position d'association,
- la figure 4 est une coupe latérale d'un dispositif selon une variante de la réalisation de la figure 3, en position d'association,
- la figure 5 est une coupe latérale d'un dispositif selon une troisième réalisation, en position d'association (a) et en position d'extraction (b),
- la figure 6 est une coupe latérale d'un dispositif selon une quatrième réalisation, en position d'association lorsque le cache bagages est en position d'extraction.

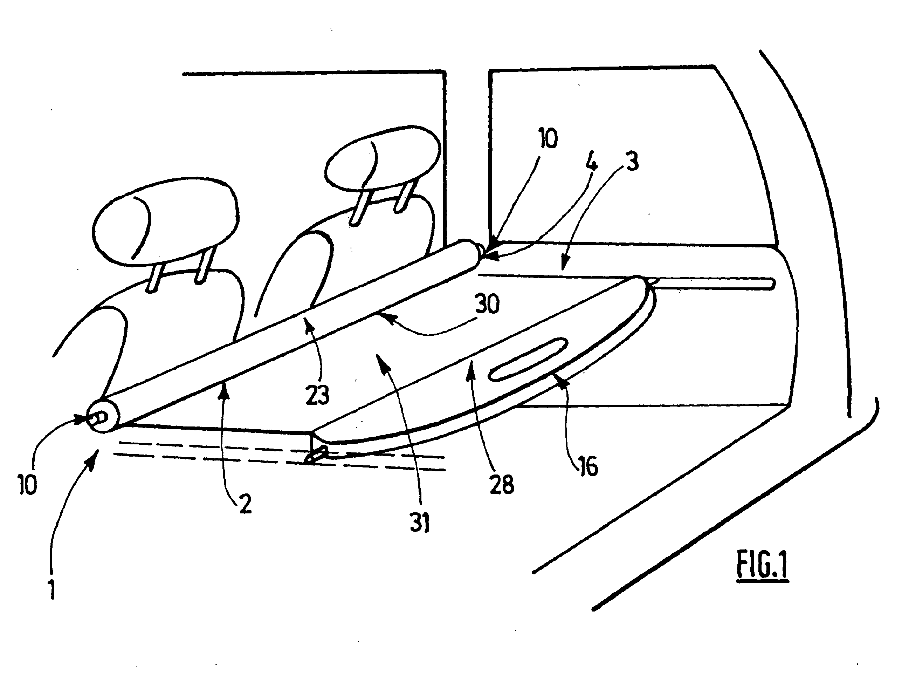

Dans toutes les figures, à l'exception de la figure 1, le cache-bagages est représenté avec sa bande souple en position rétractée, c'est à dire en configuration pour être démonté.

En référence à la figure 1, on décrit à présent un dispositif de montage 1 d'un cache-bagages 2 sur une ébénisterie de coffre 3, le cache-bagages comprenant un moyen de préhension 16 et un carter 23.

Le carter 23 comprend en ses extrémités deux moyens d'association 10 associés à des moyens d'association réciproques 4 prévus sur les ébénisteries.

Le carter 23 comprend une fente longitudinale 30 destinée à permettre le passage d'une bande souple 31 reliée d'une part à un enrouleur, notamment à couple de rappel, et d'autre part, sur un côté opposé, à une bavette rigide 28 comprenant le moyen de préhension 16.

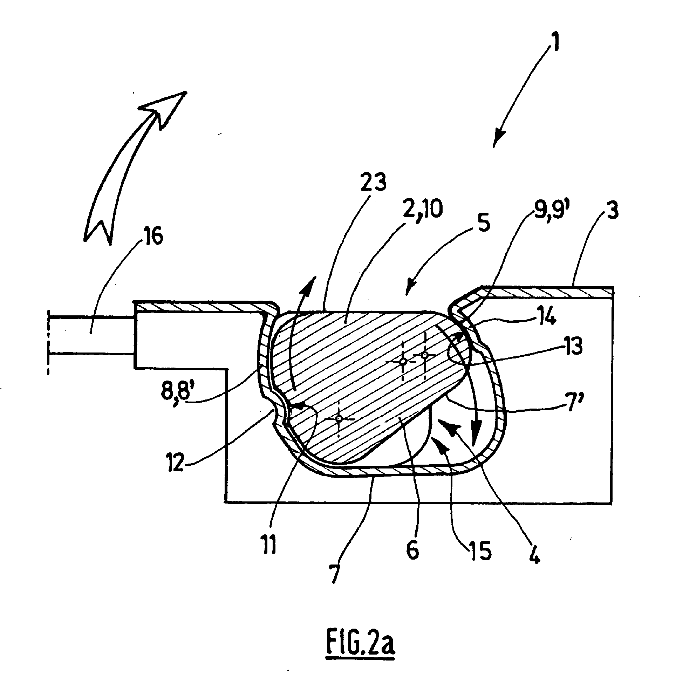

Sur la figure 2a, le cache-bagages 2 est représenté en position d'association du carter 23 sur l'ébénisterie 3.

Le moyen de préhension 16 est saillant par rapport au carter 23 de sorte à pouvoir être actionné en rotation (flèche épaisse) autour d'un axe longitudinal compris dans le carter 23.

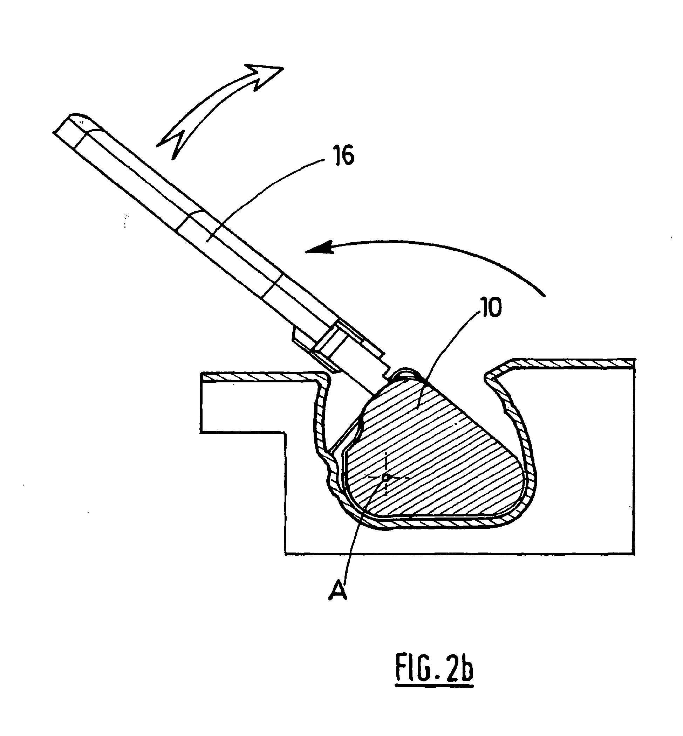

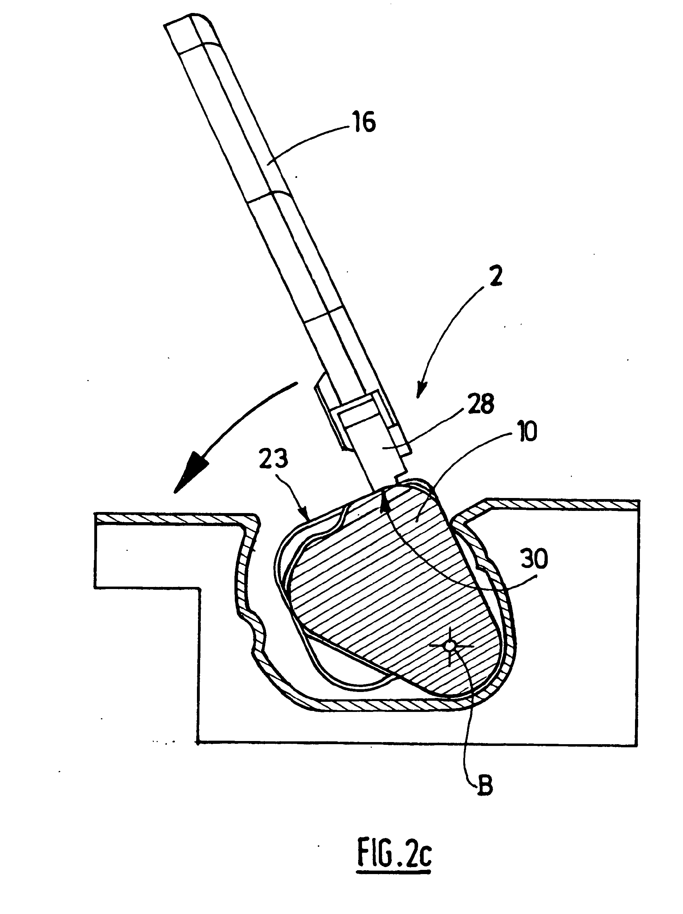

Le moyen d'association réciproque est formé par un logement 4 dans l'ébénisterie 3, ouvert dans sa partie supérieure 5 et dans sa partie latérale 6 débouchant sur le coffre, le moyen d'association réciproque comprenant :
- une face inférieure 7 sensiblement horizontale,
- une face arrière 8 concave disposée en dépouille par rapport à la face inférieure 7,
- et une face avant 9 concave disposée en contre-dépouille par rapport à la face inférieure 7,
le moyen d'association se présentant sous la forme d'un embout 10, disposé en extrémité du carter 23, et présentant des faces 7',8',9' correspondant à celles du moyen d'association réciproque,
- la face arrière 8' du moyen d'association étant pourvue dans sa partie médiane d'un premier creux longitudinal 11 coopérant, en position d'association du carter 23 sur l'ébénisterie 3, avec un premier bossage longitudinal 12 prévu sur la face arrière 8 du moyen d'association réciproque, le versant inférieur du premier creux 11 - respectivement du premier bossage 12 - formant première surface de butée - respectivement première surface de butée réciproque,
- la face avant 9' du moyen d'association étant pourvue dans sa partie supérieure d'un deuxième bossage longitudinal 13 coopérant, en position d'association du carter 23 sur l'ébénisterie 3, avec un deuxième creux longitudinal 14 prévu sur la face avant 9 du moyen d'association réciproque, le deuxième bossage 13 - respectivement deuxième creux 14 - formant deuxième surface de butée - respectivement deuxième surface de butée réciproque,
- les faces inférieures du moyen d'association 7' et du moyen d'association réciproque 7 étant séparées par un espacement 15 permettant, lors de l'actionnement du moyen de préhension 16 (figures 2b et 2c), la rotation du carter 23 et du moyen d'association et la désactivation de la coopération des surfaces de butées correspondantes.

Typiquement, l'embout 10 peut être formé d'une pièce injectée emboîtée en extrémité du carter 23.

La figure 2b montre l'effet d'un actionnement (flèche épaisse) du moyen de préhension 16, l'embout 10 effectuant une rotation autour d'un axe longitudinal A de sorte à désactiver la coopération des surfaces de butées correspondantes.

La figure 2c montre l'effet d'une rotation complémentaire de l'embout 10, autour d'un axe longitudinal B, permettant une extraction aisée du cache-bagages 2 par l'utilisateur.

De façon non représentée, un méplat disposé à l'avant de la bavette 28 s'introduit dans la fente 23 du carter 23 lorsque la bande souple est rétractée. Ceci permet de garantir l'entraînement en rotation de l'embout 10 lors de l'actionnement du moyen de préhension 16. Une telle réalisation peut être évitée si l'enrouleur est pourvu d'un couple de rappel suffisant pour maintenir de façon ferme la bavette 28 contre le carter 23 et éviter leur dissociation lors de l'actionnement du moyen de préhension 16.

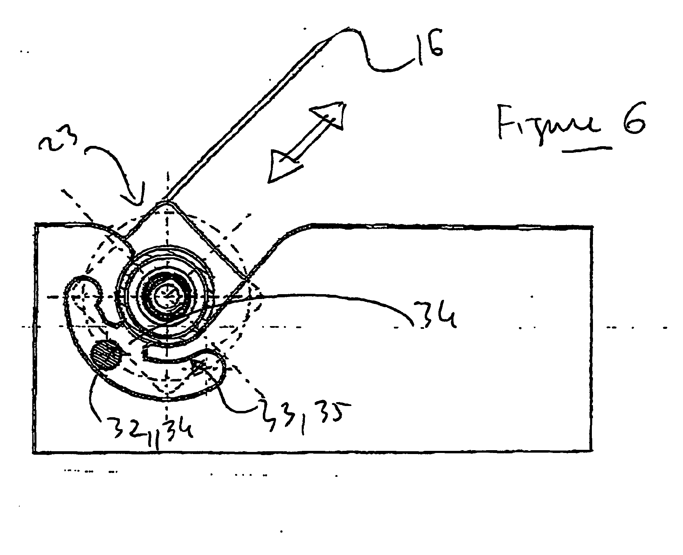

La figure 6 montre un dispositif dans lequel une surface de butée 32 est disposée sur un doigt 34 parallèle à l'axe autour duquel s'effectue la rotation de la partie de préhension 16 et décalé vers l'avant par rapport audit axe, la surface de butée réciproque 33 étant disposée dans un oblong 35 recevant ledit doigt, ledit oblong étant en arc de cercle centré sur ledit axe et de concavité tournée vers l'arrière du véhicule, ledit oblong comprenant une ouverture médiane 34 agencée pour permettre l'extraction dudit doigt dudit oblong lorsque le carter 23 et en position d'extraction, ledit doigt étant maintenu dans ledit oblong quand ledit carter est dans une position située de part ou d'autre de ladite position d'extraction, de sorte à maintenir ledit carter en position d'association.

Une telle réalisation permet de garantir l'association du carter 23 lorsque la partie de préhension 16 est en position sensiblement horizontale, correspondant à une position du doigt 34 en haut de l'oblong 35. En outre, en cas de collision créant une rotation de la partie de préhension 16, le doigt 34 est projeté vers le bas de l'oblong 35 et reste logé dans ledit oblong, ce qui permet de maintenir fermement le cache bagages 2 sur l'ébénisterie 3, de sorte à assurer la sécurité des passagers en évitant sa projection dans l'habitacle.

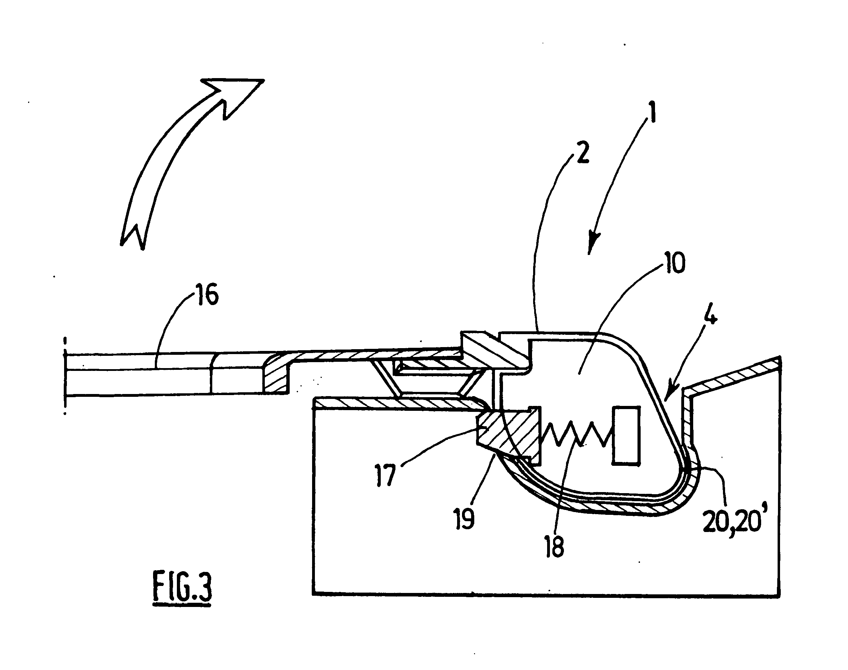

La figure 3 montre un dispositif 1 dans lequel une première surface de butée est disposée sur un ergot 17 mobile en translation entre une position saillante et une position escamotée, ledit ergot étant positionné à l'arrière d'un embout 10 de carter 23 et étant solidaire d'un ressort 18 le déployant en position saillante, un logement annexe 19 étant prévu dans un logement 4 d'ébénisterie de sorte à accueillir l'ergot 17 en position saillante et à former première surface de butée réciproque lorsque le carter 23 est en position d'association.

Une deuxième surface de butée est formée par la face avant 20' du logement 4, la surface de butée réciproque correspondante étant formée par la face avant 20 de l'embout 10.

Le dispositif 1, représenté en position d'association, permet une extraction du cache-bagages 2 par actionnement (flèche épaisse) du moyen de préhension 16 de sorte à réaliser une rotation de l'embout 10, le ressort 18 et la forme de l'ergot 17 étant agencés pour permettre un escamotage de l'ergot 17 par actionnement du moyen de préhension 16 et un retrait du cache-bagages 2.

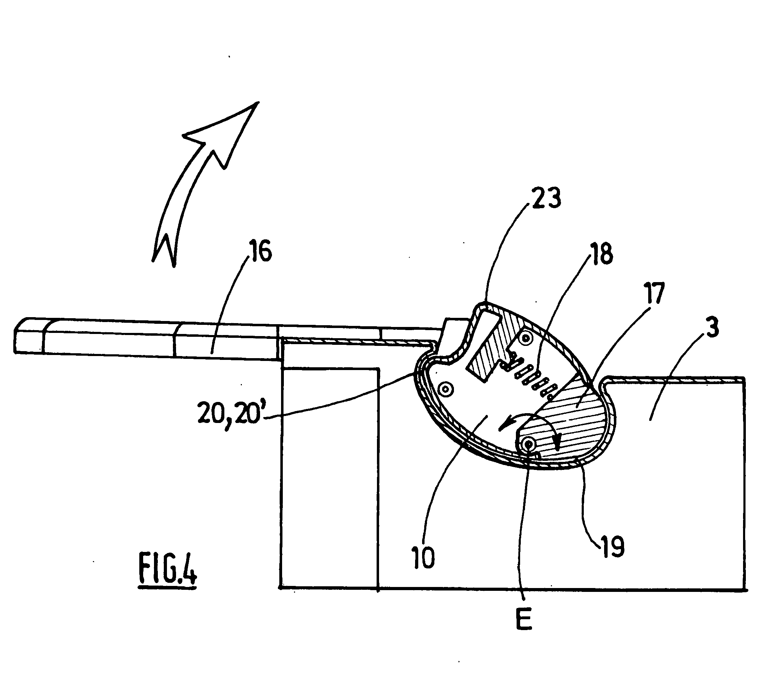

La figure 4 est une variante de la réalisation représentée en figure 3, l'ergot 17 étant disposé à l'avant du moyen d'association et étant articulé en rotation, et non mobile en translation comme précédemment, autour d'un axe longitudinal E. L'embout 17 est maintenu en position déployée au moyen d'un ressort. La géométrie de l'ergot 17, plus étendue que dans la réalisation présentée en figure 3, permet d'assurer une manoeuvre de démontage/montage aisée par actionnement (flèche épaisse) du moyen de préhension 16.

Lors de son actionnement, le moyen de préhension 16 entraîne en rotation le carter 23, ce qui produit un escamotage de l'embout 17, puis permet le retrait du carter 23 une fois supprimé le couplage entre les surfaces de butées 20,20' disposées cette fois-ci en partie arrière.

En variante non représentée des réalisations représentées en figures 3 et 4, l'ergot présente une souplesse permettant d'éviter l'utilisation d'un ressort. Un tel ergot peut par exemple être formé à base de matériau élastomère.

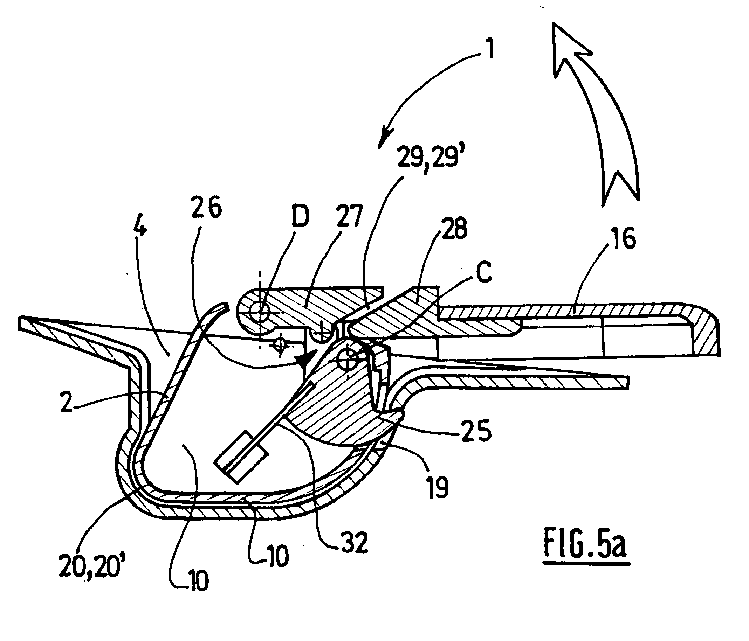

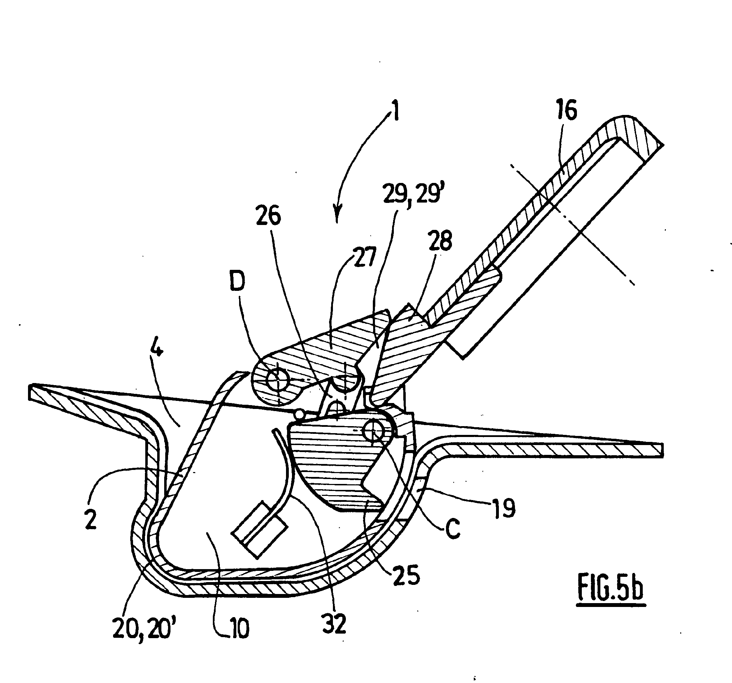

La figure 5a,b montre également un dispositif 1 à ergot. Une surface de butée est disposée sur un ergot 17 mobile en rotation entre une position saillante et une position escamotée, ledit ergot étant positionné à l'avant ou à l'arrière dudit moyen d'association, ledit ergot étant monté en rotation autour d'un premier axe longitudinal C et étant rendu solidaire d'une biellette 26, ladite biellette étant raccordée en outre à une butée de déverrouillage 27 mobile en rotation autour d'un deuxième axe longitudinal D, ladite butée coopérant avec ladite bavette, par l'intermédiaire de surfaces de came 29, 29' réciproques, de sorte à être actionnée en rotation lors de l'actionnement dudit moyen de préhension et à assurer l'escamotage dudit ergot par l'intermédiaire de ladite biellette, un logement annexe 19 étant prévu dans ledit moyen d'association réciproque de sorte à accueillir ledit ergot en position saillante et à former surface de butée réciproque lorsque ledit carter est en position d'association.

Outre le premier couple de surfaces de butée correspondantes décrit ci-dessus, le dispositif 1 met en jeu un deuxième couple formé par la face avant 20' du moyen d'association réciproque (un logement 4) formant surface de butée réciproque, la surface de butée correspondante étant formée par la face avant 20 du moyen d'association (un embout 10).

Un moyen de contrainte élastique, tel qu'un ressort à lame 32, est prévu pour garantir que l'ergot 25 soit en position déployée, et assurer ainsi une bonne association du carter à l'ébénisterie.

Comme on le voit sur la figure 5b, l'actionnement du moyen de préhension 16, solidaire de la bavette 28, produit un escamotage mécanique de l'ergot 25 permettant le retrait du cache-bagages 2.

Dans toutes les réalisation présentées, l'ensemble cache-bagages/ébénisterie latérale de coffre de véhicule automobile peut être pourvu de deux couples de moyens d'association/association réciproque prévus respectivement au voisinage des deux extrémités du carter.

Bien entendu, le montage du carter sur les ébénisteries se fait de façon sensiblement symétrique à celle de son montage.

## Revendications

1. Dispositif de montage (1) d'un cache-bagages (2) sur une ébénisterie latérale (3) d'un coffre de véhicule automobile, le cache-bagages (2) comprenant :
• un carter (23) allongé pourvu d'une fente longitudinale (30),
• un enrouleur monté en rotation dans le carter (23),
• au moins une bande souple (31), passant à travers la fente (30), dont le premier bord longitudinal est associé à l'enrouleur, de sorte que la bande souple (31) soit mobile entre une position rétractée de rangement dans le carter (23) et une position déployée d'utilisation,
• une bavette de rigidification (28), associé au deuxième bord longitudinal de la bande souple (31) et dont au moins une partie est saillante par rapport au carter (23) lorsque la bande souple (31) est rétractée, de sorte à former moyen de préhension (16),
• un moyen d'association réversible du carter (23) sur l' ébénisterie (3), ledit moyen d'association étant prévu en extrémité du carter (23) de sorte à pouvoir être associé à un moyen d'association réciproque prévu sur l'ébénisterie (3),
le dispositif étant **caractérisé en ce que** le moyen d'association présente au moins une surface de butée (11, 13, 17, 20, 32) et le moyen d'association réciproque au moins une surface de butée réciproque (12, 14, 19, 20', 33), les surfaces de butée correspondantes coopérant entre elles en position d'association du carter (23) sur l'ébénisterie (3), de sorte à assurer le couplage du moyen d'association et du moyen d'association réciproque lors du déploiement de la bande souple (31), l'actionnement en rotation autour d'un axe longitudinal de la partie de préhension (16) produisant une suppression de la coopération entre les surfaces de butées correspondantes (11, 13, 17, 20, 32, 12, 14, 19, 20', 33) de sorte à permettre l'extraction du carter (23).

2. Dispositif selon la revendication 1, **caractérisé en ce** le moyen d'association réciproque est formé par un logement (4) dans l'ébénisterie (3), ouvert dans sa partie supérieure (5) et dans sa partie latérale (6) débouchant sur le coffre, le moyen d'association réciproque comprenant :
• une face inférieure (7) sensiblement horizontale,
• une face arrière (8) concave disposée en dépouille par rapport à la face inférieure (7),
• et une face avant (9) concave disposée en contre-dépouille par rapport à la face inférieure (7),
le moyen d'association se présentant sous la forme d'un embout (10) disposé en extrémité du carter (23) et présentant des faces (7', 8', 9') correspondant à celles du moyen d'association réciproque,
• la face arrière (8') du moyen d'association étant pourvue dans sa partie médiane d'un premier creux longitudinal (11) coopérant, en position d'association du carter (23) sur l'ébénisterie (3), avec un premier bossage longitudinal (12) prévu sur la face arrière (8) du moyen d'association réciproque, le versant inférieur du premier creux (11) - respectivement du premier bossage (12) - formant première surface de butée - respectivement première surface de butée réciproque,
• la face avant (9') du moyen d'association étant pourvue dans sa partie supérieure d'un deuxième bossage longitudinal (13) coopérant, en position d'association du carter (23) sur l'ébénisterie (3), avec un deuxième creux longitudinal (14) prévu sur la face avant (9) du moyen d'association réciproque, le deuxième bossage (13) - respectivement le deuxième creux (14) - formant deuxième surface de butée - respectivement deuxième surface de butée réciproque,
• les faces inférieures du moyen d'association (7') et du moyen d'association réciproque (7) étant séparées par un espacement (15) permettant, lors de l'actionnement du moyen de préhension (16), la rotation du carter (23) et du moyen d'association et la désactivation de la coopération des surfaces de butées correspondantes.

3. Dispositif selon la revendication 1, **caractérisé en ce que** la surface de butée (32) est disposée sur un doigt (34) parallèle à l'axe autour duquel s'effectue la rotation de la partie de préhension (16) et décalé vers l'avant par rapport audit axe, la surface de butée réciproque (33) étant disposée dans un oblong (35) recevant ledit doigt, ledit oblong étant en arc de cercle centré sur ledit axe et de concavité tournée vers l'arrière du véhicule, ledit oblong comprenant une ouverture médiane (34) agencée pour permettre l'extraction dudit doigt dudit oblong lorsque le carter (23) et en position d'extraction, ledit doigt étant maintenu dans ledit oblong quand ledit carter est dans une position située de part ou d'autre de ladite position d'extraction.

4. Dispositif selon la revendication 1, **caractérisé en ce que** une surface de butée est disposée sur un ergot (17) mobile entre une position saillante et une position escamotée, l'ergot étant positionné à l'avant ou à l'arrière du moyen d'association et étant solidaire d'un moyen de contrainte (18) le déployant en position saillante, un logement annexe (19) étant prévu dans le moyen d'association réciproque de sorte à accueillir l'ergot (17) en position saillante et à former surface de butée réciproque lorsque le carter (23) est en position d'association.

5. Dispositif selon la revendication 4, **caractérisé en ce que** le moyen de contrainte est un ressort (18), l'ergot (17) et le ressort (18) étant respectivement agencés de sorte à permettre l'escamotage de l'ergot (17) lors de l'actionnement du moyen de préhension (16) entraînant une rotation du carter (23).

6. Dispositif selon la revendication 1, **caractérisé en ce que** une surface de butée est disposée sur un ergot souple compressible, l'ergot étant positionné à l'avant ou à l'arrière du moyen d'association, un logement annexe étant prévu dans le moyen d'association réciproque de sorte à accueillir l'ergot et à former surface de butée réciproque lorsque le carter (23) est en position d'association, l'ergot se désengageant du logement annexe et se positionnant en position compressée contre le moyen d'association lors de l'actionnement du moyen de préhension (16) entraînant une rotation du carter (23).

7. Dispositif selon l'une quelconque des revendications 1 à 6, **caractérisé en ce que** la bavette (28) comprend un moyen de coopération avec le carter (23), le carter (23) comprenant un moyen de coopération réciproque de sorte à bloquer le moyen de préhension (16) en rotation par rapport au carter (23) lorsque la bande souple (31) est en position rétractée.

8. Dispositif selon la revendication 7, **caractérisé en ce que** le moyen de coopération est formé par un méplat disposé à l'avant de la bavette (28), le moyen de coopération complémentaire étant formé par la fente (30) du carter (23), le méplat s'introduisant dans la fente (30) lorsque la bande souple (31) est rétractée.

9. Dispositif selon la revendication 1, **caractérisé en ce que** une surface de butée est disposée sur un ergot (17) mobile en rotation sur le moyen d'association entre une position saillante et une position escamotée, l'ergot (17) étant positionné à l'avant ou à l'arrière du moyen d'association, l'ergot (17) étant monté en rotation autour d'un premier axe longitudinal (C) et étant rendu solidaire d'une biellette (26), la biellette étant raccordée en outre à une butée de déverrouillage (27) mobile en rotation autour d'un deuxième axe longitudinal (D), la butée de déverrouillage (27) coopérant avec la bavette (28), par l'intermédiaire de surfaces de came (29, 29') réciproques, de sorte à être actionnée en rotation lors de l'actionnement du moyen de préhension (16) et à assurer l'escamotage de l'ergot (17) par l'intermédiaire de la biellette (26), un logement annexe (19) étant prévu dans le moyen d'association réciproque de sorte à accueillir l'ergot (17) en position saillante et à former surface de butée réciproque lorsque le carter (23) est en position d'association.

10. Ensemble cache-bagages/ébénisterie latérale de coffre de véhicule automobile comprenant au moins un dispositif (1) selon l'une quelconque des revendications précédentes.

## Claims

1. Device (1) for mounting a luggage cover (2) on the lateral bodywork (3) of an.automobile boot, wherein the luggage cover (2) comprises:
- an elongated housing (23) fitted with a longitudinal slot (30),
- a winding device mounted in rotation inside the housing (23),
- at least one flexible strap (31), passing through the slot (30), of which the first longitudinal edge is associated to the winding device, so that the flexible strap (31) can move between a retracted storage position inside the housing (23) and an extended operating position,
- a rigidifying flap (28) associated to the second longitudinal edge of the flexible strap (31), at least part of which extends outside of the housing (23) when the flexible strap (31) is retracted, so as to form means of gripping (16),
- reversible means of associating the housing (23) to the bodywork (3), wherein said means of association are fitted onto the end of the housing (23) so that they may be associated to reciprocal means fitted onto the bodywork (3),
wherein the device is **characterised in that** the means of association has at least one stop surface (11, 13, 17, 20, 32) and the reciprocal means of association has at least one reciprocal stop surface (12, 14, 19, 20', 33), wherein the corresponding stop surfaces cooperate with one another in the position where the housing (23) is associated to the bodywork (3), so as to ensure the coupling between the means of association and the reciprocal means of association when the flexible strap (31) is extended, wherein the actuation in rotation around a longitudinal axis of the gripping means (16) causes the end of the cooperation between the corresponding stop surfaces (11, 13, 17, 20, 32, 12, 14, 19, 20', 33) so that the housing (23) may be removed.

2. Device according to claim 1, **characterised in that** the reciprocal means of association is formed by a recess (4) in the bodywork (3), open at the top (5) and on its lateral portion (6) open over the boot, wherein the reciprocal means of association comprises:
- a lower face (7) that is substantially horizontal,
- a concave rear face (8) in a retracted position with respect to the lower face (7),
- and a concave front face (9) in an extended position with respect to the lower face (7),
wherein the means of association is in the form of an end part (10) located on the end of the housing (23) with faces (7', 8', 9') corresponding to those of the reciprocal means of association,
- the rear face (8') of the means of association is fitted in its median portion with a first longitudinal hollow (11) which cooperates, in the position where the housing (23) is associated to the bodywork (3), with a first longitudinal boss (12) located on the rear face (8) of the reciprocal means of association, wherein the lower face of the first hollow (11) - respectively of the first boss (12) - forms the first stop surface - respectively the first reciprocal stop surface,
- the front face (9') of the means of association is fitted in its upper portion with a second longitudinal boss (13) which cooperates, in the position where the housing (23) is associated to the bodywork (3), with a second longitudinal hollow (14) fitted on the front face (9) of the reciprocal means of association, wherein the second boss (13) - respectively the second hollow (14) - forms the second stop surface - respectively the second reciprocal stop surface,
- the lower faces of the means of association (7') and the reciprocal means of association (7) are separated by a space (15) which permits, when the gripping means (16) are actuated, the housing (23) and the means of association to be rotated and also the deactivation of the cooperation between the corresponding stop surfaces.

3. Device according to claim 1, **characterised in that** the stop surface (32) is positioned on a rod (34) parallel to the axis around which the gripping means (16) rotates and that is offset in a forward direction with respect to said axis, wherein the reciprocal stop surface (33) is positioned in an oblong (35) which houses the said rod, wherein said oblong is in a half-circle centred on said axis that is concave and facing towards the rear of the vehicle, wherein said oblong comprises a median opening (34) positioned so as to allow said rod to be extracted from said oblong when the housing (23) is in the extraction position, wherein said rod is held in said oblong when said housing is located in a position on either side of said extraction position.

4. Device according to claim 1, **characterised in that** a stop surface is positioned on a tab (17) which moves between a protruding position and a retracted position, wherein the tab is positioned at the front or at the rear of the means of association and is attached to stress means (18) which deploy it in the extended position, wherein an appended recess (19) is provided in the reciprocal means of association in order to accommodate the tab (17) in its protruding position and to form a reciprocal stop surface when the housing (23) is in its association position.

5. Device according to claim 4, **characterised in that** the stress means is a spring (18), wherein the tab (17) and the spring (18) are respectively positioned so as to permit the retraction of the tab (17) when the gripping means (16) is actuated causing rotation of the housing (23).

6. Device according to claim 1, **characterised in that** a stop surface is located on a compressible flexible tab, wherein the tab is positioned at the front of or at the rear of the means of association, wherein an appended recess is provided in the reciprocal means of association so as to accommodate the tab and to form a reciprocal stop surface when the housing (23) is in the association position, wherein the tab withdraws from the appended recess and is positioned in a compressed position against the means of association when the gripping means (16) is actuated causing rotation of the housing (23).

7. Device according to any of claims 1 to 6, **characterised in that** the flap (28) comprises means of cooperation with the housing (23), the housing (23) comprising reciprocal cooperation means so as to block the gripping means (16) in rotation with respect to the housing (23) when the flexible strap (31) is in the retracted position.

8. Device according to claim 7, **characterised in that** the means of cooperation is formed by a flat located at the front of the flap (28), wherein the complementary means of cooperation is formed by the slot (30) of the housing (23), wherein the flat is inserted into the slot (30) when the flexible strap (31) is retracted.

9. Device according to claim 1 **characterised in that** a stop surface is located on a tab (17) which is mobile in rotation on the means of association between a protruding position and a retracted position, wherein the tab (17) is positioned at the front of or at the rear of the means of association, wherein the tab (17) is mounted in rotation around a first longitudinal axis (C) and is attached to a connecting rod (26), wherein the connecting rod is further attached to a release stop (27) that is mobile in rotation around a second longitudinal axis (D), wherein the release stop (27) cooperates with the flap (28) by means of reciprocal cam surfaces (29, 29'), so that it is actuated in rotation when the gripping means (16) is actuated and to ensure the retraction of the tab (17) by means of the connecting rod (26), wherein an appended recess (19) is provided in the reciprocal means of association so as to accommodate the tab (17) in its protruding position and to form a reciprocal stop surface when the housing (23) is in its association position.

10. Luggage cover/lateral vehicle boot bodywork unit comprising at least one device (1) of any of the previous claims.

## Patentansprüche

1. Montagevorrichtung (1) einer Kofferraumabdeckung (2) auf einem seitlichen Gehäuse (3) eines Kraftfahrzeugkofferraums, wobei die Kofferraumabdeckung (2) Folgendes umfasst:
- ein längliches Gehäuse (23), das mit einem Längsschlitz (30) versehen ist,
- eine Aufrollvorrichtung, die im Gehäuse (23) drehbar gelagert ist,
- zumindest ein biegsames Band (31), das durch den Schlitz (30) hindurchgeht, und dessen erster Längsrand mit der Aufrollvorrichtung verbunden ist, so dass das biegsame Band (31) zwischen einer eingezogenen Verstauposition im Gehäuse (23) und einer ausgefahrenen Verwendungsposition beweglich ist,
- eine Versteifungsschürze (28), die mit dem zweiten Längsrand des biegsamen Bandes (31) verbunden ist, und von der zumindest ein Teil in Bezug auf das Gehäuse (23) vorragt, sobald das biegsame Band (31) eingezogen ist, so dass sie ein Greifmittel (16) bildet,
- ein reversibles Verbindungsmittel des Gehäuses (23) mit dem Gehäuse (3), wobei das Verbindungsmittel am Ende des Gehäuses (23) angeordnet ist, so dass es mit einem reziproken Verbindungsmittel, das auf dem Gehäuse (3) angeordnet ist, verbunden werden kann,
wobei die Vorrichtung **dadurch gekennzeichnet ist, dass** das Verbindungsmittel zumindest eine Anschlagfläche (11, 13, 17, 20, 32) und das reziproke Verbindungsmittel zumindest eine reziproke Anschlagfläche (12, 14, 19, 20', 33) aufweist, wobei die entsprechenden Anschlagflächen in der Verbindungsposition des Gehäuses (23) mit dem Gehäuse (3) zusammenwirken, so dass sie beim Ausfahren des biegsamen Bandes (31) die Kopplung des Verbindungsmittels mit dem reziproken Verbindungsmittel sicherstellen, wobei die rotatorische Betätigung um eine Längsachse des Greifteiles (16) eine Beendigung des Zusammenwirkens zwischen den entsprechenden Anschlagflächen (11, 13, 17, 20, 32, 12, 14, 19, 20', 33) hervorruft, so dass das Herausnehmen des Gehäuses (23) ermöglicht wird.

2. Vorrichtung nach Anspruch 1, **dadurch gekennzeichnet, dass** das reziproke Verbindungsmittel durch eine Aufnahme (4) im Gehäuse (3) gebildet wird, und dass es in seinem oberen Bereich (5) und in seinem seitlichen Bereich (6) offen ist, der in den Kofferraum mündet, wobei das reziproke Verbindungsmittel Folgendes umfasst:
- eine im Wesentlichen waagrechte Unterseite (7),
- eine konkave Hinterseite (8), die als Rücknahme in Bezug auf die Unterseite (7) angeordnet ist,
- und eine konkave Vorderseite (9), die in Bezug auf die Unterseite (7) hinterschnitten angeordnet ist,
wobei das Verbindungsmittel die Form eines Ansatzes (10) aufweist, der am Ende des Gehäuses (23) angeordnet ist und Seiten (7', 8', 9') aufweist, die jenen des reziproken Verbindungsmittels entsprechen,
- wobei die Hinterseite (8') des Verbindungsmittels in ihrem Mittelbereich mit einer ersten Längsaushöhlung (11) versehen ist, die in Verbindungsposition des Gehäuses (23) mit dem Gehäuse (3) mit einer ersten Längsausbuchtung (12), die auf der Hinterseite (8) des reziproken verbindungsmittels vorgesehen ist, zusammenwirkt, wobei die untere Schrägseite der ersten Aushöhlung (11) beziehungsweise der ersten Ausbuchtung (12) eine erste Anschlagfläche beziehungsweise eine erste reziproke Anschlagfläche bildet,
- wobei die Vorderseite (9') des Verbindungsmittels in ihrem Oberbereich mit einer zweiten Längsausbuchtung (13) versehen ist, die in Verbindungsposition des Gehäuses (23) mit dem Gehäuse (3) mit einer zweiten Längsaushöhlung (14), die auf der Vorderseite (9) des reziproken Verbindungsmittels vorgesehen ist, zusammenwirkt, wobei die zweite Ausbuchtung (13) beziehungsweise die zweite Aushöhlung (14) eine zweite Anschlagfläche beziehungsweise eine zweite reziproke Anschlagfläche bilden,
- wobei die Unterseiten des Verbindungsmittels (7') und des reziproken Verbindungsmittels (7) durch einen Abstand (15) getrennt sind, der beim Betätigen des Greifmittels (16) die Rotation des Gehäuses (23) und des Verbindungsmittels und die Außerkraftsetzung des Zusammenwirkens der entsprechenden Anschlagflächen ermöglicht.

3. Vorrichtung nach Anspruch 1, **dadurch gekennzeichnet, dass** die Anschlagfläche (32) auf einem Zapfen (34) angeordnet ist, der parallel zur Achse verläuft, um welche die Rotation des Greifteiles (16) erfolgt, und der in Bezug auf besagte Achse nach vorne versetzt ist, wobei die reziproke Anschlagfläche (33) in einem Langloch (35) angeordnet ist, das den Zapfen aufnimmt, wobei das Langloch kreisbogenförmig auf der Achse zentriert ist und eine Konkavität in Richtung des Hinterbereiches des Fahrzeuges aufweist, wobei das Langloch eine mittlere Öffnung (34) umfasst, die angeordnet ist, um das Herausnehmen des Zapfens aus dem Langloch zu ermöglichen, sobald sich das Gehäuse (23) in Herausnahmeposition befindet, wobei der Zapfen im Langloch festgehalten wird, wenn sich das Gehäuse in einer Position auf der einen oder anderen Seite der Herausnahmeposition befindet.

4. Vorrichtung nach Anspruch 1, **dadurch gekennzeichnet, dass** eine Anschlagfläche auf einer Nase (17) angeordnet ist, die zwischen einer vorspringenden Position und einer eingezogenen Position bewegbar ist, wobei die Nase auf der Vorderseite oder auf der Hinterseite des Verbindungsmittels positioniert und mit einem Spannmittel (18) verbunden ist, das sie in die vorspringende Position ausfährt, wobei eine Nebenaufnahme (19) im reziproken Verbindungsmittel vorgesehen ist, um die Nase (17) in vorspringender Position aufzunehmen und um eine reziproke Anschlagfläche zu bilden, wenn sich das Gehäuse (23) in Verbindungsposition befindet.

5. Vorrichtung nach Anspruch 4, **dadurch gekennzeichnet, dass** das Spannmittel eine Feder (18) ist, wobei die Nase (17) und die Feder (18) jeweils so angeordnet sind, dass das Einziehen der Nase (17) beim Betätigen des Greifmittels (16) ermöglicht wird, was eine Rotation des Gehäuses (23) mit sich bringt.

6. Vorrichtung nach Anspruch 1, **dadurch gekennzeichnet, dass** eine Anschlagfläche auf einer biegsamen, komprimierbaren Nase angeordnet ist, wobei die Nase auf der Vorderseite oder auf der Hinterseite des Verbindungsmittels positioniert ist, wobei eine Nebenaufnahme im reziproken Verbindungsmittel vorgesehen ist, um die Nase aufzunehmen und um eine reziproke Anschlagfläche zu bilden, wenn sich das Gehäuse (23) in Verbindungsposition befindet, wobei sich die Nase von der Nebenaufnahme löst und sich in eine gegen das Verbindungsmittel komprimierte Position begibt, wenn das Greifmittel (16) betätigt wird, was eine Rotation des Gehäuses (23) mit sich bringt.

7. Vorrichtung nach einem der Ansprüche 1 bis 6, **dadurch gekennzeichnet, dass** die Schürze (28) ein Mittel zum Zusammenwirken mit dem Gehäuse (23) umfasst, wobei das Gehäuse (23) ein reziprokes Zusammenwirkmittel umfasst, um das Greifmittel (16) in Bezug auf das Gehäuse (23) rotatorisch zu blockieren, wenn sich das biegsame Band (31) in eingezogener Position befindet.

8. Vorrichtung nach Anspruch 7, **dadurch gekennzeichnet, dass** das Zusammenwirkmittel von einer Abflachung gebildet wird, die auf der Vorderseite der Schürze (28) angeordnet ist, wobei das komplementäre Zusammenwirkmittel vom Schlitz (30) des Gehäuses (23) gebildet wird, wobei sich die Abflachung in den Schlitz (30) einfügt, wenn das biegsame Band (31) eingezogen ist.

9. Vorrichtung nach Anspruch 1, **dadurch gekennzeichnet, dass** eine Anschlagfläche auf einer Nase (17) angeordnet ist, die auf dem Verbindungsmittel zwischen einer vorspringenden Position und einer eingezogenen Position drehbar ist, wobei die Nase (17) auf der Vorderseite oder auf der Hinterseite des Verbindungsmittels positioniert ist, wobei die Nase (17) drehbar um eine erste Längsachse (C) montiert und mit einer Schubstange (26) verbunden ist, wobei die Schubstange des Weiteren mit einem Entriegelungsanschlag (27) verbunden ist, der um eine zweite Längsachse (D) drehbar ist, wobei der Entriegelungsanschlag (27) mittels reziproker Nockenflächen (29, 29') mit der Schürze (28) zusammenwirkt, so dass er beim Betätigen des Greifmittels (16) rotatorisch betätigt wird und das Einziehen der Nase (17) über die Schubstange (26) gewährleistet, wobei eine Nebenaufnahme (19) im reziproken Verbindungsmittel vorgesehen ist, um die Nase (17) in vorspringender Position aufzunehmen und um eine reziproke Anschlagfläche zu bilden, wenn sich das Gehäuse (23) in Verbindungsposition befindet.

10. Anordnung aus Kofferraumabdeckung und seitlichem Gehäuse eines Kraftfahrzeugkofferraums, die zumindest eine Vorrichtung (1) nach einem der vorhergehenden Ansprüche umfasst.
